# EUROPÄISCHE PATENTSCHRIFT

(11) **EP 3 571 973 B1**
(45) Veröffentlichungstag und Bekanntmachung des Hinweises auf die Patenterteilung: **22.10.2025**
(21) Anmeldenummer: 19168662.5
(22) Anmeldetag: 11.04.2019
(51) Int. Cl.: A47L 9/14, B01D 46/00

(54) **STAUBSAUGERBEUTEL, VERPACKUNG FÜR STAUBSAUGERBEUTEL, STAUBSAUGER MIT EINEM STAUBSAUGERBEUTEL UND VERFAHREN ZUR ERFASSUNG MINDESTENS EINES SCHADSTOFFES AN EINEM STAUBSAUGERBEUTEL**
VACUUM CLEANER BAG, PACKAGE FOR VACUUM CLEANER BAG, VACUUM CLEANER WITH A VACUUM CLEANER BAG AND METHOD FOR DETECTING AT LEAST ONE POLLUTANT ON A VACUUM CLEANER BAG
SAC D'ASPIRATEUR, EMBALLAGE POUR SAC D'ASPIRATEUR, ASPIRATEUR DOTÉ D'UN SAC D'ASPIRATEUR ET PROCÉDÉ DE DÉTECTION D'AU MOINS UN POLLUANT SUR UN SAC D'ASPIRATEUR

(30) Priorität: 24.05.2018 DE 102018112522
(43) Veröffentlichungstag der Anmeldung: 27.11.2019
(73) Patentinhaber: Wolf PVG GmbH & Co. KG, 32427 Minden (DE)
(72) Erfinder: SCHMIDT, Marc, 32423 Minden (DE); CZADO, Wolfgang, 32457 Porta Westfalica (DE)
(74) Vertreter: Dantz, Jan Henning

(56) Entgegenhaltungen:
- DE-A1- 19 831 313
- DE-A1- 3 439 992

## Beschreibung

Die vorliegende Erfindung betrifft einen Staubsauger mit einem Staubsaugerbeutel.

Die EP 1 915 939 B1 offenbart einen Staubsaugerbeutel aus einem Filtermaterial, in den die zu reinigende eingesaugte Luft in zwei Kammern gefiltert wird. Durch die Strömungsführung der eintretenden Luft und die Auswahl eines geeigneten Filtermaterials, insbesondere aus einem mehrlagigen Vliesstoff, lassen sich Staub und andere Schadstoffe aus der eingesaugten Luft entfernen.

DE 198 31 313 A1 offenbart einen Adsoprtionssensor zur Bestimmung von Menge und Art mehrerer ad- oder absorbierbarer Stoffe in Fluiden oder Aerosolen, der für Staubsaugerfilter verwendet werden kann.

DE 91 01 101.9 U1 offenbart einen Staubsaugerbeutel mit den Merkmalen des Staubsaugerbeutels des Oberbegriffs des Anspruchs 1.

Solche Staubsaugerbeutel nehmen neben Hausstaub auch alle im Hausstaub vorhandenen Schadstoffe auf. Für den Nutzer wäre die Kenntnis, mit welchen potenziell gefährlichen Stoffen sein Hausstaub und sein direktes Lebensumfeld belastet ist, wichtig, um etwaige Gegenmaßnahmen ergreifen zu können.

Es ist daher Aufgabe der vorliegenden Erfindung, einen Staubsauger mit einem Staubsaugerbeutel zu schaffen, der dem Nutzer eines Staubsaugerbeutels Informationen über den eingesaugten Staub und darin enthaltene Schadstoffe gibt.

Diese Aufgabe wird mit einem Staubsauger mit einem Staubsaugerbeutel mit den Merkmalen des Anspruches 1 gelöst.

Erfindungsgemäß umfasst der Staubsauger einen Staubsaugerbeutel, wobei an oder in dem Staubsaugerbeutel mindestens ein Sensor zur Erfassung mindestens eines Schadstoffes vorgesehen ist, wobei der mindestens eine Sensor mit einer Auswerteeinheit des Staubsaugers in Verbindung steht. Dadurch kann die Messung des eingesaugten Staubes an oder in dem Staubsaugerbeutel durchgeführt werden, wo die Konzentration mit Staub und etwaigen Schadstoffen am größten ist. Die Messung über den mindestens einen Sensor kann optional an einer Anzeige des Staubsaugers angezeigt werden, und zusätzlich oder alternativ kann auch die Steuerung des Staubsaugers abhängig von dem Messergebnis des Sensors gesteuert werden.

Erfindungsgemäß kann der mindestens eine Sensor zur Erfassung von organischen Schadstoffen ein Reinigungsaggregat an dem Staubsauger anschalten, wenn bei Überschreiten einer bestimmten Belastung eines organischen Schadstoffes eine erhöhte Reinigung durchgeführt werden soll.

Ein solches Reinigungsaggregat an dem Staubsauger kann beispielsweise eine UV-Bestrahlungseinheit im Strömungsweg zu dem Staubsaugerbeutel oder weg von dem Staubsaugerbeutel sein. Alternativ oder zusätzlich kann eine Dosiereinrichtung für ein Desinfektionsmittel an dem Staubsauger vorgesehen sein, die abhängig von der Messung gesteuert wird.

Der Staubsaugerbeutel umfasst den mindestens einen Sensor zur Erfassung mindestens eines Schadstoffes. Dadurch kann nach dem Einsaugen von Staub über den mindestens einen Sensor eine Messung erfolgen, inwieweit der eingesaugte Staub mit einem oder mehreren Schadstoffen belastet ist, was dem Nutzer qualitative und optional auch quantitative Angaben über Schadstoffe geben kann. Ein Schadstoff ist dabei ein Stoff oder Stoffgemisch, der schädlich für Menschen oder Tiere ist, wobei der Ursprung des Schadstoffes natürlich oder künstlich sein kann.

Vorzugsweise ist an dem Staubsaugerbeutel eine Anzeige zur Visualisierung des Messergebnisses des mindestens einen Sensors vorgesehen. Eine solche Anzeige kann beispielsweise ein Testfeld sein, das mit einem Indikator versehen ist, der bei Detektion des mindestens einen Schadstoffes sich verfärbt. Beispielsweise kann an oder in dem Staubsaugerbeutel ein Flüssigkeitsbehälter, wie ein Foliensachet, vorgesehen sein, der für eine Messung zu Öffnen ist, damit sich die Flüssigkeit mit dem eingesaugten Staub vermischt und zu dem Testfeld gelangt. Dadurch kann an dem Testfeld angezeigt werden, ob und gegebenenfalls in welcher Menge ein vorbestimmter Schadstoff vorhanden ist.

Mit dem mindestens einen Sensor werden erfindungsgemäß organische Schadstoffe erfasst. Zu den organischen Schadstoffen zählen Schadstoffe biologischer Herkunft, insbesondere Pollen, Bakterien, Schimmelpilze, Sporen, Viren, Milben, wobei der Sensor wahlweise auf einzelne Schadstoffe gerichtet sein kann. Alternativ oder zusätzlich kann eine Messung durch den mindestens einen Sensor für proteinbasierte Allergene, wie beispielsweise Milbenkotallergene, durchgeführt werden.

In einer weiteren Ausgestaltung kann alternativ oder zusätzlich ein Sensor zur Erfassung von anorganischen Schadstoffen vorgesehen sein. Dadurch können beispielsweise Wohngifte aus Möbel oder Einrichtungsgegenständen erfasst werden, wie Formaldehyd, Weichmacher, Lösemittel. Metallabrieb, wie Nickel, Chrom, aber auch typische Luftschadstoffe wie Ozon, Stickoxid, Feinstaub, Dieselruß, oder Zigarettenrauch.

Bei einem Verfahren zur Erfassung mindestens eines Schadstoffes an einem Staubsaugerbeutel wird zunächst der Staubsaugerbeutel in dem Staubsauger positioniert, um dann Staub einzusaugen. Anschließend wird ein Messvorgang an dem Staubsaugerbeutel zur Erfassung mindestens eines Schadstoffes eingeleitet und das Messergebnis angezeigt und/oder der Staubsauger abhängig von dem Messergebnis gesteuert. Die Anzeige des Messergebnisses kann dabei wahlweise direkt am Staubsaugerbeutel oder an einer Anzeige des Staubsaugers erfolgen.

Die Erfindung wird nachfolgend anhand eines Ausführungsbeispiels mit Bezug auf die beigefügten Zeichnungen näher erläutert. Es zeigen:

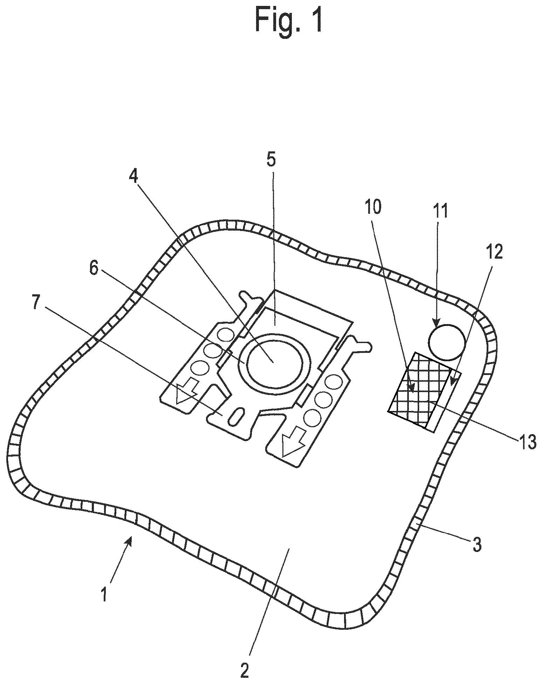

- Figur 1: eine perspektivische Ansicht eines Staubsaugerbeutels, und
- Figuren 2A und 2B: zwei schematische Ansichten eines Sensors bei der Durchführung einer Messung zur Erfassung eines Schadstoffes.

Ein Staubsaugerbeutel 1 umfasst eine erste und eine zweite Beutelwand 2 aus einem Filtermaterial, die randseitig durch eine umlaufende Schweißnaht 3 miteinander verbunden sind. Der Staubsaugerbeutel 1 ist somit als Flachbeutel ausgebildet, wobei optional ein oder mehrere Falten, insbesondere Seitenfalten, vorgesehen sein können. Zudem kann der Staubsaugerbeutel 1 auch als Klotzbodenbeutel oder mit einer anderen Geometrie ausgestaltet sein.

In der Beutelwand 2 ist eine Einströmöffnung 4 ausgebildet, um die eine Halteplatte 5 angeordnet ist, um den Staubsaugerbeutel 1 in einem Staubsauger zu halten. In der Halteplatte 5 steht ein Ring 6 aus einem elastischen Material oder aus Filtermaterial hervor, um eine Abdichtung gegenüber einem Stutzen eines Staubsaugers bereitzustellen. Die Einströmöffnung 4 ist über ein Verschlusselement 7 verschließbar, das als Schieber oder verschwenkbare Klappe ausgebildet sein kann.

Der Staubsaugerbeutel 1 kann aus einem Filtermaterial bestehen, das aus einem mehrlagigen Vliesstoff gebildet ist. Optional können auch weitere Materiallagen aus Papier oder Folie vorgesehen sein.

An dem Staubsaugerbeutel 1 befindet sich an einer Außenseite ein Sensor 10 zur Erfassung eines Schadstoffes, der ein Testfeld 13 aufweist, das neben einer Referenzskala 12 angeordnet ist. Ferner ist ein Flüssigkeitsbehälter 11, insbesondere ein Sachet, mit einer Extraktionslösung vorgesehen.

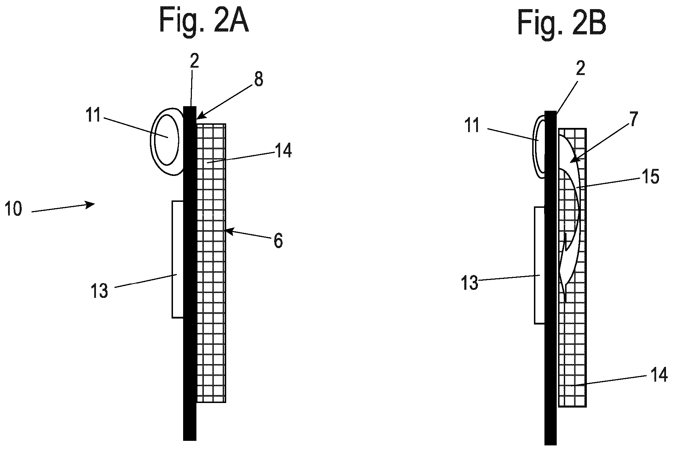

Die Messung mit dem Sensor 10 wird in Verbindung mit den Figuren 2A und 2B näher erläutert. In Figur 2A ist eine geschnittene Ansicht durch das Filtermaterial der Beutelwand 2 gezeigt, auf der an einer Außenseite der Flüssigkeitsbehälter 11 sowie das Testfeld 13 vorgesehen sind. Um eine Messung mit dem Sensor 10 durchzuführen, wird der Flüssigkeitsbehälter 11 geöffnet. Ein Foliensachet kann beispielsweise durch Drücken geöffnet werden, der Flüssigkeitsbehälter 11 kann allerdings auch als Mikroflasche oder Spritze ausgebildet sein. Der Flüssigkeitsbehälter 11 kann ein Volumen zwischen 0,5 bis 5 ml aufweisen, um mit der Flüssigkeit als Extraktionslösung eine Messung durchzuführen. Der Flüssigkeitsbehälter 11 ist in Figur 2A außen auf der Beutelwand 2 aufgebracht. Es ist aber auch möglich, in der Beutelwand 2 eine Öffnung auszustanzen, und den Flüssigkeitsbehälter 11 umlaufend mit der Beutelwand 2 zu verschweißen, so dass der Flüssigkeitsbehälter 11 in die Beutelwand integriert ist.

Der Flüssigkeitsbehälter 11 kann an der Innenseite des Staubsaugerbeutels eine Sollbruchstelle aufweisen, so dass durch Knicken oder Drücken die Sollbruchstelle reißt und die Extraktionsflüssigkeit dann von dem Flüssigkeitsbehälter 11 auf den an der Beutelwand 2 anhaftenden Staub 14 strömt und von diesem aufgesaugt wird. In Figur 2B ist schematisch gezeigt, wie der Flüssigkeitsbehälter 11 geleert wird und gemäß dem Pfeil 15 zu dem Testfeld 13 strömt. In der Umgebung des Flüssigkeitsbehälters 11, beispielsweise in einem Abstand von weniger als 50 mm, ist das Testfeld 13 vorgesehen, das mit einem Indikator beschichtet ist, beispielsweise durch Drucken. Der Indikator kann wahlweise außen oder innen an dem Testfeld 13 vorgesehen sein. Um die Strömung der Flüssigkeit zu lenken, kann zwischen dem Flüssigkeitsbehälter 11 und dem Testfeld 13 eine Strömungshilfe vorgesehen sein, beispielsweise ein stärkerer Vliesstoff oder eine Folie, um die Flüssigkeit von dem Flüssigkeitsbehälter 11 zu dem Testfeld 13 zu leiten.

Im Bereich des Testfeldes 13 kann das Filtermaterial des Staubsaugerbeutels 1 durch ein anderes Material ersetzt sein, beispielsweise ein geeignetes Vlies, Papier oder ein Material, das eine bessere Benetzung mit der Extraktionslösung und/oder dem Indikator ermöglicht. Die freigesetzte Flüssigkeit wird vom Hausstaub aufgesaugt und löst hierbei Schadstoffe, wie Milbenallergene, Proteine aus dem Staub und wandert so mithilfe verschiedener Effekte, wie Diffusion, Kapillareffekte. Benetzung des Staubes, Schwerkraft, weiter, bis die Flüssigkeit mit den gelösten Allergenen oder weiteren Schadstoffen das Testfeld 13 erreicht und dort eine Farbreaktion auslöst, die in der Regel durch eine enzymatische Reaktion gebildet ist.

Durch entsprechende Einbauten in dem Staubsaugerbeutel 1, weiche die Flüssigkeit gezielt von dem Flüssigkeitsbehälter 11 zu dem Testfeld 13 leitet, kann die Sensibilität der Messung erhöht werden, indem zum Beispiel Bereiche auf der Innenseite des Staubsaugerbeutels an dem Sensor 10 mit Folie bedeckt sind und die Flüssigkeit zurückgelenkt wird. Zudem können an dem Flüssigkeitsbehälter rinnenförmige Leitelemente vorgesehen sein, mittels denen die Flüssigkeit zu dem Testfeld 13 geleitet wird.

Um aufgrund der Farbreaktion an dem Testfeld auf die Menge an Allergenen oder Schadstoffen zu schließen, kann eine Referenz 12, beispielsweise eine Farbskala auf dem Staubsaugerbeutel 1 oder einer Verpackung des Staubsaugerbeutels 1 angebracht sein.

Zusätzlich oder alternativ zu dem Sensor 10 zur Erfassung von organischen Schadstoffen kann der Sensor auch andere Messprinzipien einsetzen, um Schadstoffe zu erfassen. Beispielsweise kann der Sensor mechanisch auf einen Schadstoff reagieren, beispielsweise indem die Schwingfrequenz einer Testfläche durch Anlagerung eines Schadstoffes verändert wird. Alternativ kann der Sensor auf den Schadstoff elektrisch reagieren, beispielsweise indem der elektrische Widerstand eines Elements durch Wechselwirkung mit einem Schadstoff verändert wird, wie dies bei Sensoren mit Mischoxiden der Fall ist, bei denen sich bei Einwirkung von Schadstoffen, die reduzierende oder oxidierende Eigenschaften haben, die elektrische Leitfähigkeit ändert. Ferner kann der Sensor magnetisch auf den Schadstoff reagieren, indem die Schwingfrequenz einer magnetischen Testfläche durch Anlagerung eines Schadstoffes verändert wird oder sich die Induktivität einer Testspule ändert. Ferner können, wie oben schon gezeigt, chemische Reaktionen an dem Sensor durchgeführt werden, beispielsweise wenn ein chemischer Stoff auf einer Testfläche durch Reaktion mit einem Schadstoff verändert wird, insbesondere eine Farbreaktion auftritt.

Mit solchen Sensoren können daher verschiedene Formen von Schadstoffen erfasst werden, beispielsweise Verunreinigungen aus der Luft, wie Ammoniak, Formaldehyd, Stickoxide, Benzol oder Rauch. Hierfür sind insbesondere Sensoren aus oder mit Mischoxiden geeignet, bei denen eine Änderung der elektrischen Leitfähigkeit abhängig von der Art und der Konzentration des Schadstoffes stattfindet.

Alternativ oder zusätzlich können Schwermetalle erfasst werden, wie Nickel, wenn eine ammoniakhaltige Lösung aus dem eingesaugten Staub gelöst wird und ein mit Dimethylglyoxim imprägniertes Testfeld bei einer Messung rot wird.

Wie oben schon erläutert wurde, können proteinbasierte Allergene, wie beispielsweise das Milbenkotallergen, erfasst werden, indem eine alkalische Alkohollösung zu einem Testfeld geleitet wird, um ein mit einem Indikator imprägniertes Testfeld zu färben.

Alternativ oder zusätzlich können zum Nachweis von Bakterien, Pilzen und Sporen Nährmedien vorgesehen sein, auf denen die einzelnen Mikroben zu arttypischen Kolonien heranwachsen. Vorzugsweise sind diese auf einer durchsichtigen Folie im Inneren des Staubsaugerbeutels aufgebracht, so dass der Nutzer diese durch die Folie hindurch gefahrlos betrachten kann.

Bei einer Verpackung für Staubsaugerbeutel können mehrere Staubsaugerbeutel vorgesehen sein, wobei an oder in der Verpackung mindestens ein Sensor 10 und/oder ein Testkit zur Erfassung und Visualisierung mindestens eines Schadstoffes vorgesehen ist. Dabei kann wahlweise einer der Staubsaugerbeutel einer Verpackung mit einem Sensor versehen sein oder der Sensor ist getrennt von den Staubsaugerbeuteln angeordnet, um dann eine Messung an einem oder mehreren der Staubsaugerbeutel durchführen zu können. Das Messverfahren kann wie oben beschrieben durchgeführt werden.

Zudem kann eine Messung an dem Staubsaugerbeutel auch durchgeführt werden, wenn der Staubsaugerbeutel in den Staubsauger eingelegt ist.

Bei einer Messung mindestens eines Schadstoffes durch einen Sensor an dem Staubsaugerbeutel im Staubsauger kann eine Auswerteeinheit des Staubsaugers mit dem Sensor in Verbindung stehen, um beispielsweise einen Steuervorgang auszulösen. An dem Staubsauger kann mindestens ein Reinigungsaggregat vorgesehen sein, das bei Überschreiten einer Belastung mit einem Schadstoff zugeschaltet werden kann. Beispielsweise kann das Reinigungsaggregat eine UV-Bestrahlungseinheit und/oder eine Dosiereinrichtung für ein Desinfektionsmittel aufweisen, die nur dann zugeschaltet werden, wenn die Belastung mit organischen Schadstoffen einen bestimmten Wert übersteigt.

### Bezugszeichenliste

- 1: Staubsaugerbeutel
- 2: Beutelwand
- 3: Schweißnaht
- 4: Einströmöffnung
- 5: Halteplatte
- 6: Ring
- 7: Verschlusselement
- 10: Sensor
- 11: Flüssigkeitsbehälter
- 12: Referenzskala
- 13: Testfeld
- 14: Staub
- 15: Pfeil

## Patentansprüche

1. Staubsauger mit einem Staubsaugerbeutel (1), wobei an oder in dem Staubsaugerbeutel (1) mindestens ein Sensor zur Erfassung mindestens eines Schadstoffes vorgesehen ist und der mindestens eine Sensor mit einer Auswerteeinheit des Staubsaugers in Verbindung steht , **dadurch gekennzeichnet, dass** der mindestens eine Sensor zur Erfassung von organischen Schadstoffen vorgesehen ist, und der Staubsauger ein Reinigungsaggregat aufweist, das bei Überschreiten einer Belastung mit organischen Schadstoffen zuschaltbar ist.

2. Staubsauger mit einem Staubsaugerbeutel (1), wobei an oder in dem Staubsaugerbeutel (1) mindestens ein Sensor zur Erfassung mindestens eines Schadstoffes vorgesehen ist und der mindestens eine Sensor mit einer Auswerteeinheit des Staubsaugers in Verbindung steht

## Claims

1. Vacuum cleaner with a vacuum cleaner bag (1), wherein at least one sensor for detecting at least one pollutant is provided on or in the vacuum cleaner bag (1) and the at least one sensor is connected to an evaluation unit of the vacuum cleaner, **characterized in that** the at least one sensor is provided for detecting organic pollutants, and the vacuum cleaner has a cleaning unit that can be activated when the level of organic pollutants is exceeded.

2. Vacuum cleaner with a vacuum cleaner bag (1), wherein at least one sensor for detecting at least one pollutant is provided on or in the vacuum cleaner bag (1) and the at least one sensor is connected to an evaluation unit of the vacuum cleaner.

## Revendications

1. Aspirateur avec un sac à poussière (1), dans lequel au moins un capteur destiné à détecter au moins une substance nocive est prévu sur ou dans le sac à poussière (1) et le au moins un capteur est relié à une unité d'évaluation de l'aspirateur, **caractérisé en ce que** le capteur est prévu pour détecter des polluants organiques et l'aspirateur comporte un groupe de nettoyage qui peut être activé en cas de dépassement d'une concentration en polluants organiques.

2. Aspirateur avec un sac à poussière (1), dans lequel au moins un capteur destiné à détecter au moins une substance nocive est prévu sur ou dans le sac à poussière (1) et le au moins un capteur est relié à une unité d'évaluation de l'aspirateur.
